# EUROPEAN PATENT SPECIFICATION

(11) **EP 3 597 857 B1**
(45) Date of publication and mention of the grant of the patent: **07.07.2021**
(21) Application number: 19175487.8
(22) Date of filing: 20.05.2019
(51) Int. Cl.: F01D 5/18

(54) **AIRFOIL HAVING ANGLED TRAILING EDGE SLOTS**
SCHAUFEL MIT GENEIGTEN HINTERKANTENSCHLITZEN
PROFIL AÉRODYNAMIQUE COMPORTANT DES FENTES DE BORD DE FUITE INCLINÉES

(30) Priority: 20.07.2018 US 201862701024 P; 02.08.2018 US 201816052730
(43) Date of publication of application: 22.01.2020
(73) Proprietor: Raytheon Technologies Corporation, Farmington, CT 06032 (US)
(72) Inventor: SPANGLER, Brandon W., Vernon, CT 06066 (US); TRACY, Kevin D., Biddeford, ME 04005 (US); MONGILLO, Dominic J., Jr., West Hartford, CT 06107 (US)
(74) Representative: Dehns

(56) References cited:
- EP-A2- 1 553 261
- WO-A1-94/12771
- US-A- 3 807 892
- US-A1- 2014 147 287
- US-B1- 6 234 754

## Description

### BACKGROUND

The subject matter disclosed herein generally relates to airflow in components of gas turbine engines and, more particularly, to pedestals and slots in a trailing edge cavity of an airfoil in components of gas turbine engines.

Airfoils, and particularly airfoils of gas turbine engines, may include internal flow passages to enable cooling of the airfoils. The supply of the cooling air through cavities of the airfoils may be carefully designed so as to provide an efficient cooling configuration. However, various structures and/or features of the airfoils may impact cooling schemes, thus reducing the efficiency and/or effectiveness of a cooling scheme.

US 6234754 B1 discloses an airfoil with a cooling cavity and a plurality of heat transfer members disposed in the rearmost section of the trailing edge, which comprises a single impingement rib, a single row of pedestals, and a single row of chordwise-extending flow dividers.

US 2014/147287 A1 discloses an airfoil having a trailing edge cooling passageway and first, second, and third flow dividers in the cooling passageway, the flow dividers having longitudinal axes that are angled based upon a position of the flow divider relative to the tip section of the airfoil.

US 3807892 A discloses a guide blade for a gas turbine engine having a cooling cavity, the cooling cavity comprising two separated flow paths.

EP 1553261 A2 discloses an airfoil having a plurality of cooling passages and a nonlinear trailing edge, wherein the airfoil further comprises an array of teardrop shaped assemblies, which form a plurality of injection slots for injecting coolant fluid into a fluid passing over the airfoil portion.

WO 94/12771 A1 discloses an airfoil having a cut-back trailing edge and a plurality of diffusing flow dividers upstream of the cut-back trailing edge.

### SUMMARY

According to a first aspect of the present invention, airfoils for gas turbine engines are provided in accordance with claim 1.

Further embodiments of the airfoils may include that the bleed direction is between 40° and 70° with respect to the feed direction.

Further embodiments of the airfoils may include that the meter section has a length that is a minimum of one and a half times a hydraulic diameter.

Further embodiments of the airfoils may include an upstream heat transfer augmentation feature arranged within the cooling cavity upstream relative to the plurality of angled pedestals in a flow direction through the cooling cavity.

Further embodiments of the airfoils may include that the upstream heat transfer augmentation feature comprises a plurality of pedestals.

Further embodiments of the airfoils may include that the upstream heat transfer augmentation feature comprises an impingement rib.

Further embodiments of the airfoils may include that the diffuser section is defined between tapering walls of adjacent elongated pedestals of the plurality of angled pedestals, the diffuser section extending from the meter section to the trailing edge, wherein a downstream side defining the diffusion section has an angle β and an upstream side defining the diffusion section has an angle γ.

Further embodiments of the airfoils may include that the angle β is greater than the angle γ.

Further embodiments of the airfoils may include that the angle β is between 0° and 20°.

Further embodiments of the airfoils may include that the angle γ is between 0° and 7°.

Further embodiments of the airfoils may include that the dividing rib extends a full distance from the radially extending rib to the trailing edge.

Further embodiments of the airfoils may include that the first cooling cavity is fed cooling air from a first end of the airfoil and the second cooling cavity is fed cooling air from a second end of the airfoil.

Further embodiments of the airfoils may include that the rib flow control feature is hollow.

Further embodiments of the airfoils may include that the trailing edge is a bowed trailing edge.

Further embodiments of the airfoils may include that each angled pedestal of the plurality of angled pedestals is the same length.

Further embodiments of the airfoils may include that the angled pedestals of the plurality of angled pedestals having varying lengths.

Further embodiments of the airfoils may include that each angled pedestal of the plurality of angled pedestals is teardrop-shaped.

Further embodiments of the airfoils may include that the plurality of angled pedestals are arranged parallel to each other.

The foregoing features and elements may be executed or utilized in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1A is a schematic cross-sectional illustration of a gas turbine engine that may employ various embodiments disclosed herein;
FIG. 1B is a schematic illustration of a turbine that may employ various embodiments disclosed herein;
FIG. 2A is a schematic illustration of an example airfoil;
FIG. 2B is an enlarged schematic illustration of a portion of a trailing edge of the airfoil as indicated in dashed-box B shown in FIG. 2A;
FIG. 3 is a schematic illustration of a portion of a trailing edge of an airfoil;
FIG. 4 is a schematic illustration of a portion of a trailing edge of an airfoil in accordance with an embodiment of the present disclosure;
FIG. 5 is a schematic comparison between prior pedestal configurations and a pedestal configuration in accordance with an embodiment of the present disclosure;
FIG. 6 is a schematic illustration of a portion of a trailing edge of an airfoil in accordance with an embodiment of the present disclosure;
FIG. 7 is a schematic illustration of a portion of a trailing edge of an airfoil in accordance with an embodiment of the present disclosure;
FIG. 8 is a schematic illustration of a portion of a trailing edge of an airfoil in accordance with an embodiment of the present disclosure;
FIG. 9 is a schematic illustration of an airfoil in accordance with an example not forming part of the invention;
FIG. 10 is a schematic illustration of an airfoil in accordance with an example not forming part of the invention;
FIG. 11 is a schematic illustration of an airfoil in accordance with an example not forming part of the invention;
FIG. 12 is a schematic illustration of an airfoil in accordance with an embodiment of the present invention; and
FIG. 13 is a schematic illustration of an airfoil in accordance with an example not forming part of the invention;

### DETAILED DESCRIPTION

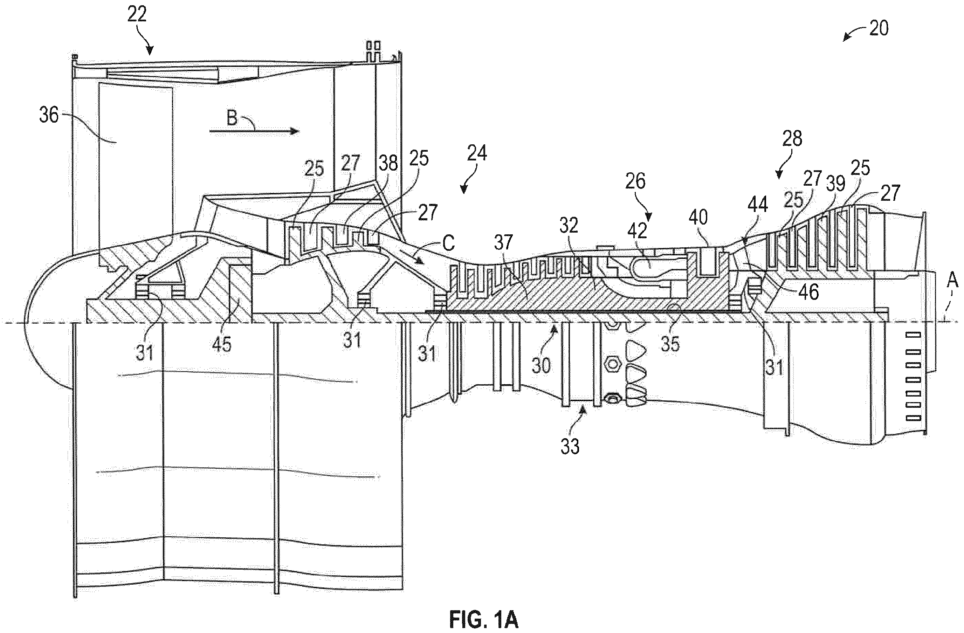

FIG. 1A schematically illustrates a gas turbine engine 20. The exemplary gas turbine engine 20 is a two-spool turbofan engine that generally incorporates a fan section 22, a compressor section 24, a combustor section 26, and a turbine section 28. The fan section 22 drives air along a bypass flow path B, while the compressor section 24 drives air along a core flow path C for compression and communication into the combustor section 26. Hot combustion gases generated in the combustor section 26 are expanded through the turbine section 28. Although depicted as a turbofan gas turbine engine in the disclosed non-limiting embodiment, it should be understood that the concepts described herein are not limited to turbofan engines and these teachings could extend to other types of engines.

The gas turbine engine 20 generally includes a low speed spool 30 and a high speed spool 32 mounted for rotation about an engine centerline longitudinal axis A. The low speed spool 30 and the high speed spool 32 may be mounted relative to an engine static structure 33 via several bearing systems 31. It should be understood that other bearing systems 31 may alternatively or additionally be provided.

The low speed spool 30 generally includes an inner shaft 34 that interconnects a fan 36, a low pressure compressor 38 and a low pressure turbine 39. The inner shaft 34 can be connected to the fan 36 through a geared architecture 45 to drive the fan 36 at a lower speed than the low speed spool 30. The high speed spool 32 includes an outer shaft 35 that interconnects a high pressure compressor 37 and a high pressure turbine 40. In this embodiment, the inner shaft 34 and the outer shaft 35 are supported at various axial locations by bearing systems 31 positioned within the engine static structure 33.

A combustor 42 is arranged between the high pressure compressor 37 and the high pressure turbine 40. A mid-turbine frame 44 may be arranged generally between the high pressure turbine 40 and the low pressure turbine 39. The mid-turbine frame 44 can support one or more bearing systems 31 of the turbine section 28. The mid-turbine frame 44 may include one or more airfoils 46 that extend within the core flow path C.

The inner shaft 34 and the outer shaft 35 are concentric and rotate via the bearing systems 31 about the engine centerline longitudinal axis A, which is co-linear with their longitudinal axes. The core airflow is compressed by the low pressure compressor 38 and the high pressure compressor 37, is mixed with fuel and burned in the combustor 42, and is then expanded over the high pressure turbine 40 and the low pressure turbine 39. The high pressure turbine 40 and the low pressure turbine 39 rotationally drive the respective high speed spool 32 and the low speed spool 30 in response to the expansion.

The pressure ratio of the low pressure turbine 39 can be pressure measured prior to the inlet of the low pressure turbine 39 as related to the pressure at the outlet of the low pressure turbine 39 and prior to an exhaust nozzle of the gas turbine engine 20. In one non-limiting embodiment, the bypass ratio of the gas turbine engine 20 is greater than about ten (10:1), the fan diameter is significantly larger than that of the low pressure compressor 38, and the low pressure turbine 39 has a pressure ratio that is greater than about five (5:1). It should be understood, however, that the above parameters are only examples of one embodiment of a geared architecture engine and that the present disclosure is applicable to other gas turbine engines, including direct drive turbofans.

In this embodiment of the example gas turbine engine 20, a significant amount of thrust is provided by the bypass flow path B due to the high bypass ratio. The fan section 22 of the gas turbine engine 20 is designed for a particular flight condition-typically cruise at about 0.8 Mach and about 35,000 feet (10,668 m). This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of [(Tram ° R)/(518.7° R)]^{0.5}, where T represents the ambient temperature in degrees Rankine. The Low Corrected Fan Tip Speed according to one non-limiting embodiment of the example gas turbine engine 20 is less than about 1150 fps (351 m/s).

Each of the compressor section 24 and the turbine section 28 may include alternating rows of rotor assemblies and vane assemblies (shown schematically) that carry airfoils that extend into the core flow path C. For example, the rotor assemblies can carry a plurality of rotating blades 25, while each vane assembly can carry a plurality of vanes 27 that extend into the core flow path C. The blades 25 of the rotor assemblies create or extract energy (in the form of pressure) from the core airflow that is communicated through the gas turbine engine 20 along the core flow path C. The vanes 27 of the vane assemblies direct the core airflow to the blades 25 to either add or extract energy.

Various components of a gas turbine engine 20, including but not limited to the airfoils of the blades 25 and the vanes 27 of the compressor section 24 and the turbine section 28, may be subjected to repetitive thermal cycling under widely ranging temperatures and pressures. The hardware of the turbine section 28 is particularly subjected to relatively extreme operating conditions. Therefore, some components may require internal cooling circuits for cooling the parts during engine operation. Example cooling circuits that include features such as airflow bleed ports are discussed below.

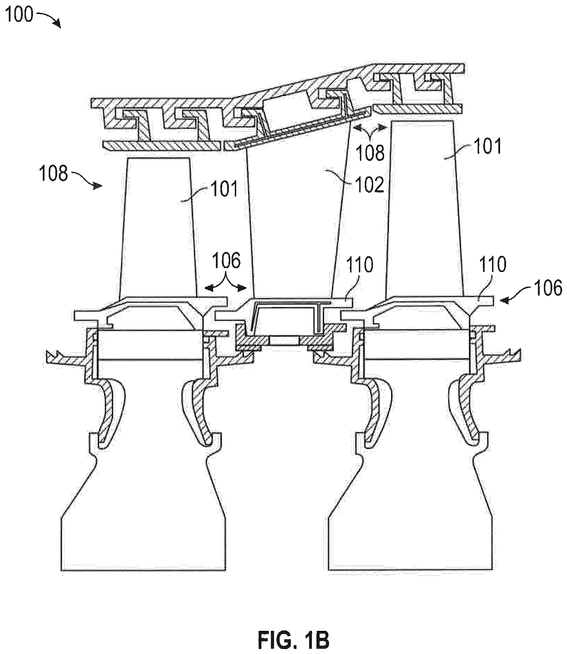

FIG. 1B is a schematic view of a turbine section that may employ various embodiments disclosed herein. Turbine 100 includes a plurality of airfoils, including, for example, one or more blades 101 and vanes 102. The airfoils 101, 102 may be hollow bodies with internal cavities defining a number of channels or cavities, hereinafter airfoil cavities, formed therein and extending from an inner diameter 106 to an outer diameter 108, or vice-versa. The airfoil cavities may be separated by partitions within the airfoils 101, 102 that may extend either from the inner diameter 106 or the outer diameter 108 of the airfoil 101, 102. The partitions may extend for a portion of the length of the airfoil 101, 102, but may stop or end prior to forming a complete wall within the airfoil 101, 102. Thus, each of the airfoil cavities may be fluidly connected and form a fluid path within the respective airfoil 101, 102. The blades 101 and the vanes 102 may include platforms 110 located proximal to the inner diameter thereof. Located below the platforms 110 may be airflow ports and/or bleed orifices that enable air to bleed from the internal cavities of the airfoils 101, 102. A root of the airfoil may connected to or be part of the platform 110.

Although an aero or aircraft engine application is shown and described above, those of skill in the art will appreciate that airfoil configurations as described herein may be applied to industrial applications and/or industrial gas turbine engines, land based or otherwise.

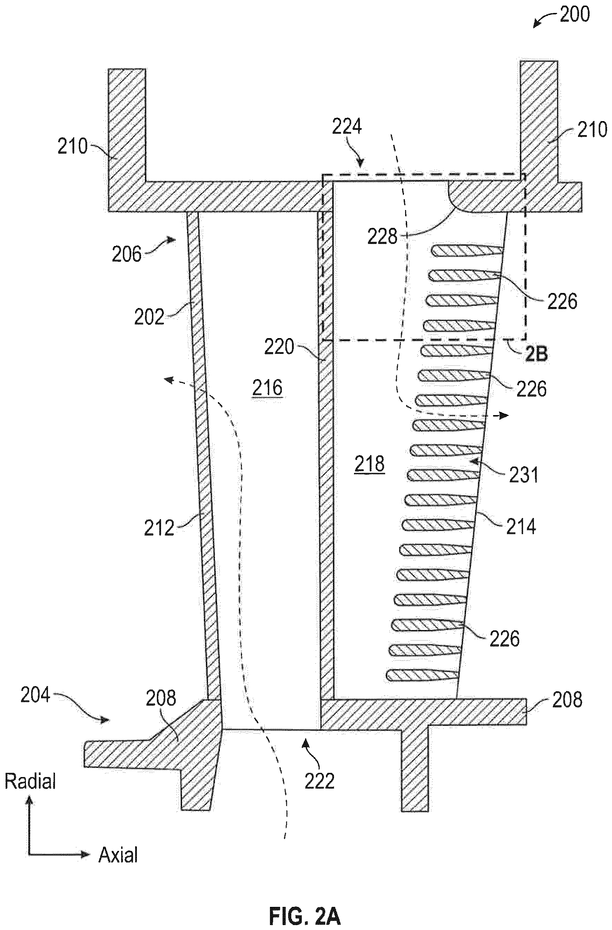

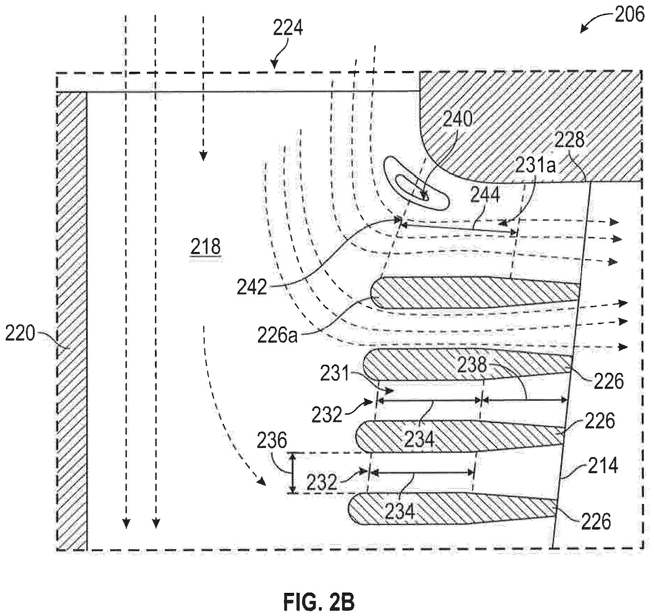

Turning now to FIGS. 2A and 2B, views of an airfoil interior structure are shown. FIG. 2A is a cross-sectional schematic illustration of airflow passages within an airfoil 200, such as a vane or blade (illustratively shown as a vane). FIG. 2B is an enlarged schematic illustration of a portion of a trailing edge of the airfoil 200 as indicated in dashed-box B shown in FIG. 2A. Those of skill in the art will appreciate that airflow passages as described herein may be applied to any type of airfoil or other component, such as blades, vanes, blade outer air seals, etc.

As shown, the airfoil 200 has an airfoil body 202 extending radially from a first end 204 (e.g., an inner diameter or root region) to a second end 206 (e.g., an outer diameter or tip region). An inner platform 208 is shown at the inner diameter (e.g., first end 204), with the airfoil body 202 extending radially therefrom, and an outer platform 210 is located at the outer diameter (e.g., second end 206) of the airfoil body 202. As shown, the airfoil body 202 defines one or more cavities and/or flow paths therein that are configured to enable cooling of the airfoil 200.

A first cooling cavity 216 is located proximate the leading edge 212 of the airfoil 200 and a second cooling cavity 218 is located proximate the trailing edge 214 of the airfoil 200. The first cooling cavity 216 is fluidly separated from the second cooling cavity 218 by a rib 220. In the embodiment of FIG. 2A, the rib 220 extends from the inner platform 208 to the outer platform 210. However, in other embodiments, the rib 220 may only extend part way between the first end 204 and the second end 206 of the airfoil 200, and thus the internal cavities thereof may be fluidly connected. Further, in some embodiments, additional ribs may be provided to enable different cooling schemes within the interior of the airfoil 200, such as forming a serpentine flow path within the airfoil 200. As shown, the first cooling cavity 216 is configured as a radially extending cavity within the airfoil 200 from the first end 204 to the second end 206 and the second cooling cavity 218 is configured as a radially extending cavity within the airfoil 200 from the second end 206 to the first end 204.

Cooling air enters the first cooling cavity 216 through a first feed supply 222 that is formed in the first platform 208. The air will then flow from the first end 204 toward the second end 206 of the airfoil body 202. As the air flows through the first cooling cavity 216, a portion of the air may be expunged or bled through one or more apertures within the surfaces of the airfoil body 202 and thus be ejected into a gaspath. Cooling air enters the second cooling cavity 218 through a second feed supply 224 that is formed in the second platform 210. The air will then flow from the second end 206 toward the first end 204 of the airfoil body 202. As the air flows through the second cooling cavity 218, a portion of the air will exit through the trailing edge 214 of the airfoil body 202 and thus be ejected into the gaspath. In some embodiments, the flow directions of the cooling flow into the first and second cooling cavities 216, 218 may be the opposite of that shown in FIGS. 2A-2B.

As shown in the example embodiment of FIG. 2A, the trailing edge 214 is configured with a plurality of pedestals 226 in the second cooling cavity 218. The pedestals 226, in various embodiments, are configured to supply a blockage to maintain feed pressure within the airfoil 200 (and particularly within the second cooling cavity 218), to enable a backflow margin for cooling holes within the airfoil body 202, to enable heat transfer augmentation on par with a refractory metal core of much smaller section thickness, and/or to enable clocking of the pedestals 226 as will be appreciated by those of skill in the art, to provide an even distribution of flow between stages of pedestals and out the trailing edge 214 of the airfoil 200, which may mitigate loss of stage efficiency from an increase in flow as compared to a refractory metal core airfoil. Although shown with a single set/column/row of pedestals 226, those of skill in the art will appreciate that multiple sets/columns/rows of pedestals and/or other flow augmentation structures/features can be used within an airfoil, and thus the illustration of FIGS. 2A-2B is merely provided for illustrative and explanatory purposes and is not intended to be limiting.

Turning to FIG. 2B, a schematic illustration of a portion of a cooling airflow as it passes through the second cooling cavity 218 at the second end 206 of the airfoil 200 is shown. As noted, cooling air enters through the second feed supply 224 and flows into and through the second cooling cavity 218. A portion of the cooling airflow will turn immediately upon entering the second cooling cavity 218 and exit proximate an end wall 228 of the airfoil 200. The end wall 228 is a portion of the airfoil body 202 that is proximate, adjacent, and/or contacting the second platform 210, as shown in FIG. 2A.

As shown in FIG. 2B, adjacent elongated pedestals 226 are spaced to define trailing edge cooling flow slots 231, and typically a uniform spacing is provided at an inlet 232 and extends along a meter section 234. As used herein, the term "elongated pedestal(s)" refers to any pedestal or other similar structure that has an elongated length and extends circumferentially from a pressure side to a suction side, and can include racetrack, teardrop, oval, conical, tapered, or other geometric/shape pedestal. That is, the term "elongated pedestal" is not to be limiting with respect to specific geometry, but rather refers to pedestals with shapes or geometries that adhere to the provided herein.

The meter section 234 is defined between parallel walls or sides of the adjacent elongated pedestals 226, as shown. That is, the trailing edge slots 231 have uniform widths 236 along the meter section 234 defined by adjacent elongated pedestals 226. Each of the trailing edge cooling flow slots 231 further includes a tapering diffuser section 238 formed aft of the meter section 234 of a given trailing edge cooling flow slot 231. The tapering diffuser section 238 expands outward from the meter section 234 to the trailing edge 214. As such, the trailing edge slots 231 widen in the streamwise direction of cooling flow toward the trailing edge 214. The uniform width 236 of the meter sections 234 of the trailing edge cooling flow slots 231 may have a length (i.e., streamwise length) based on the hydraulic diameter, typically greater than one and a half times the hydraulic diameter (1.5 D_{H}). The incorporation and utilization of a flow development length along the metering section 234, within the trailing edge cooling flow slot(s) 231, enables the cooling flow structure to be more stable and uniformly aligned, thereby improving the convective and film cooling characteristics by reducing and/or eliminating the local vortices within the cooling flow, which inherently induce more turbulent mixing and entrainment of hot gas.

However, as illustratively shown in FIG. 2B, an end slot 231a that is defined between an end (i.e., first and/or last) elongated pedestal 226a and the curved end wall 228 may not have the well-defined flow characteristics that exist in the other trailing edge slots 231. That is, flow near the end (i.e., first and/or last) elongated pedestal 226a may separate from the curved end wall 228 and generate local flow vortices 240 (e.g., flow recirculation) as the cooling airflow enters an inlet 242 of the end slot 231a located between the end (i.e., first and/or last) elongated pedestal 226a and the curved end wall 228. The local flow vortices and flow separation 240 are generated because the inlet 242 of the end slot 231a between the end (i.e., first and/or last) elongated pedestal 226a and the curved end wall 228 is larger in area than the typical meter section 234 and the end slot 231a tapers (non-uniform width section 244) due to the contour of the end wall 228, as shown. As shown, the trailing edge pedestals 226 (and end pedestal 226a) are teardrop-shaped and have tapering sides allowing for expansion of the cooling flow in order to increase the film coverage and improve film cooling characteristics of the cooling flow between adjacent elongated pedestals 226 within the trailing edge slots 231.

Although illustrated in FIGS. 2A-2B with the curved end wall 228 located at a the second end 206 of the airfoil 200, those of skill in the art will appreciate that similar curved end walls may be implemented at the first end 204 or elsewhere within the airfoil. Thus, the illustrations of FIGS. 2A-2B are merely provided for illustrative and explanatory purposes and are not intended to be limiting.

As discussed, the shape and orientation of the elongated pedestals is selected to improve flow as it exits through the trailing edge slot of the airfoil. However, these optimized and oriented elongated pedestals may still have flow inefficiencies and/or losses due to the turning of cooling flow required.

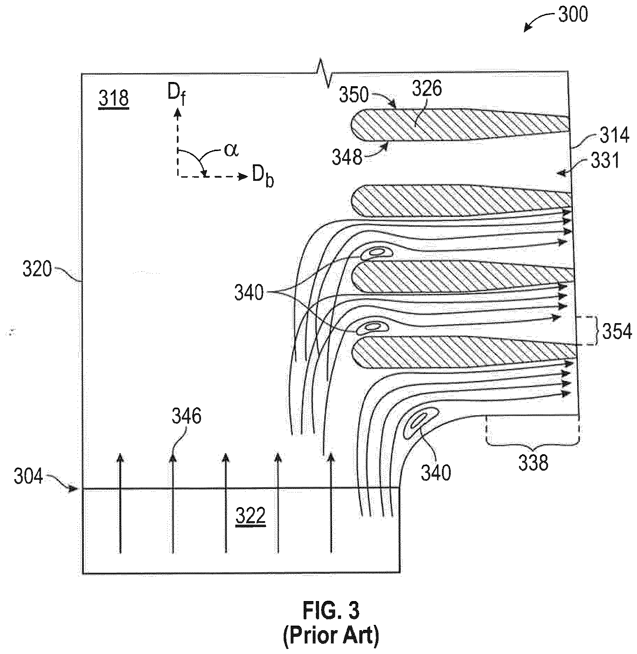

For example, turning now to FIG. 3, a schematic illustration of an airfoil interior structure is shown. FIG. 3 is a cross-sectional schematic illustration of a cooling cavity 318 within an airfoil 300 (illustratively shown as a blade). Similar to that described above, an airfoil body extends radially from a first end 304 (e.g., an inner diameter or root region) to a second end (e.g., an outer diameter or tip region). As shown, the airfoil body defines the cooling cavity 318 (e.g., a trailing edge cooling cavity) to enable cooling of the airfoil 300. The cooling cavity 318 is located proximate a trailing edge 314 of the airfoil 300. A rib 320 separates various cavities of the airfoil 300, such as described above. The cooling cavity 318 is fed a cooling flow 346 at the first end 304 of the airfoil 300. The cooling flow 346 flows radially upward/outward into and through the cooling cavity 318 from a feed supply 322, as will be appreciated by those of skill in the art. That is, the cooling flow 346 flows in a feed direction D_{f}, as shown.

Cooling air enters the cooling cavity 318 through the feed supply 322 and flows radially outward from the first end 304 toward a second end of the airfoil in the feed direction D_{f}. As the air flows through the cooling cavity 318, a portion of the air will exit through the trailing edge 314 of the airfoil and thus be ejected into the gaspath. As shown, the trailing edge 314 is configured with a plurality of elongated pedestals 326 similar to that described above. Each elongated pedestal 326 has an upstream side 348 and a downstream side 350. The cooling flow 346 flows in the feed direction D_{f} and will turn to flow between the elongated pedestals 326 in a bleed direction D_{b}. In this configuration, as shown, the cooling flow 346 will turn at a bleed angle α of about 90° when entering the trailing edge slots 331 defined between adjacent elongated pedestals 326. The bleed angle α is the angle of change in direction of the cooling flow 346 as it turns from the feed direction D_{f} to the bleed direction D_{b}. The upstream side 348 and the downstream side 350 of the elongated pedestals 326 is based on the feed direction D_{f}, as shown.

Due to the high velocity air in the cooling cavity 318, from the feed supply 322, and the angle in which the cooling flow is bled off from the cooling cavity 318 (i.e., bleed direction D_{b}), the pressure feeding the trailing edge slots 331 of the airfoil is closer to static pressure than total pressure. Further, because the cooling flow 346 will turn at the bleed angle α of about 90° when entering the trailing edge slots 331, a flow separation will result off the downstream side 350 generating local flow vorticities 340, as illustratively shown. The local flow vorticities 340 create regions of local flow separation and recirculation. As will be appreciated by those of skill in the art, these undesirable cooling flow characteristics, produce increased pressure loss and significantly reduce the internal convective heat transfer and film cooling effectiveness, resulting in lower thermal cooling performance in the airfoil trailing edge region. Further, as shown, when the airfoil 300 is a blade that is rotated within a gas turbine engine, the rotational effects cause the cooling flow 346 within the trailing edge slots 331 to be centrifuged outward causing flow separation 354 adjacent to the downstream side 350 of the elongated pedestal, as the cooling flow is expanded through the tapering diffusing section 338 at the outlets of the trailing edge slots 331. This flow separation 354 may be most apparent along the tapering diffuser sections of the elongated pedestals 326 in the diffusing section of the trailing edge slots 331.

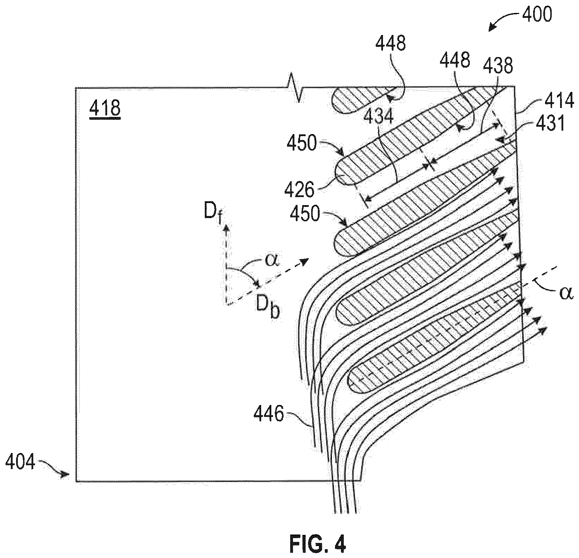

Turning now to FIG. 4, a schematic illustration of an airfoil interior structure is shown in accordance with an embodiment of the present disclosure. FIG. 4 is a cross-sectional schematic illustration of a cooling cavity 418 within an airfoil 400 (illustratively shown as a blade). Similar to that described above, an airfoil body extends radially from a first end 404 (e.g., an inner diameter or root region) to a second end (e.g., an outer diameter or tip region). As shown, the airfoil body defines the cooling cavity 418 (e.g., a trailing edge cooling cavity) to enable cooling of the airfoil 400. The cooling cavity 418 is located proximate a trailing edge 414 of the airfoil 400. The cooling cavity 418 is fed a cooling flow 446 at the first end 404 of the airfoil 400. The cooling flow 446 flows radially upward/outward into and through the cooling cavity 418 in a feed direction D_{f}, as shown.

As the cooling air flows through the trailing edge cooling cavity 418, a portion of the air will exit through one or more trailing edge slots 431 at the trailing edge 414 of the airfoil 400 and then discharge into the gaspath. The trailing edge slots 431 are defined by a plurality of elongated pedestals 426 similar to that described above. Each elongated pedestal 426 has an upstream side 448 and a downstream side 450. Further, similar to the elongated pedestals described above, the elongated pedestals 426 have a meter section 434 and a diffuser section 438. The meter section 434 of the elongated pedestals 426 are relatively oriented to define parallel walls that define a constant width (e.g., constant flow area) trailing edge slot 431. The diffuser sections 438 define tapering walls that expand the width of the trailing edge slots 431 as the trailing edge slots 431 approach the trailing edge 414 of the airfoil 400.

Continuing with reference to FIG. 4, the cooling flow 446 flows in the feed direction D_{f} and will turn to flow between the elongated pedestals 426 in a bleed direction D_{b}.

According to the invention, the cooling flow 446 will turn at a bleed angle α that is less than 90° when entering the trailing edge slots 431 defined between adjacent elongated pedestals 426. The bleed angle α is the relative angle of change in direction of flow of the cooling flow 446 as it turns from the feed direction D_{f} to the bleed direction D_{b}. The upstream side 448 and the downstream side 450 of the elongated pedestals 426 is based on the feed direction D_{f}, as shown, and with the less than 90° bleed angle α, the local flow vorticities and subsequent flow separation 240, 340 along the downstream side 450 shown in FIGS. 2-3 may be reduced and/or eliminated. In some embodiments, the bleed angle α may be between 15° and 70° with respect to the feed direction D_{f} and the cooling flow 446.

The bleed angle α is defined by the angle of the trailing edge slots 431 defined between angled elongated pedestals 426. The slanted elongated pedestals 426 are oriented at the bleed angle α such that the meter sections 434 of the angled elongated pedestals 426 incorporate parallel metering wall features that are oriented in a direction parallel to the bleed angle α. The diffuser sections 438 extend toward the trailing edge 414 from the ends of the metered sections 434. Airfoils of the present disclosure include a plurality of angled elongated pedestals 426 with each elongated pedestal being substantially oriented similar to either adjacent angled elongated pedestal, thereby creating parallel meter sections 434 that are present through the plurality of angled elongated pedestal features.

The meter sections 434 have uniform width and have a length (i.e., streamwise length) based on the hydraulic diameter. In some embodiments, the streamwise length of the meter section 434 may be greater than one and a half times the hydraulic diameter (1.5 D_{H}). The streamwise distance of the meter section 434 provides a development length necessary to "condition" the cooling flow within the trailing edge cooling flow slots 431. The ability to "condition" the cooling flow ensure a more stable and uniformly distributed flow structure is achieved within the cooling flow slots 431, thereby maximizing the local convective heat transfer, film cooling, and thermal cooling effectiveness characteristics immediately adjacent to the airfoil trailing edge. In this embodiment, as noted above, the meter sections 434, and the walls or portions of the slanted elongated pedestals 426 are parallel.

Because the angle in which flow is bled off from the cooling cavity 418 into the trailing edge slots 431 (i.e., at the bleed angle α) is less than 90°, the pressure feeding the trailing edge slots 431 is closer to total pressure than static pressure. Further, because the trailing edge slots 431 are angled at the bleed angle α in the same direction that the rotational centrifugal effect causes cooling flow to be urged radially outward, the flow separation described above may be significantly minimized or eliminated. Moreover, the local flow vorticities and region of flow separation described above that typically occurs along the elongated pedestals at the entrance to the trailing edge slots 431 due to the high rate of flow turning associated with the bleed angle α that is more consistent with 90°, may be reduced or eliminated due to the decreased relative turning of the cooling airflow flow 446 associated with the incorporation of angled elongated pedestals of the present disclosure.

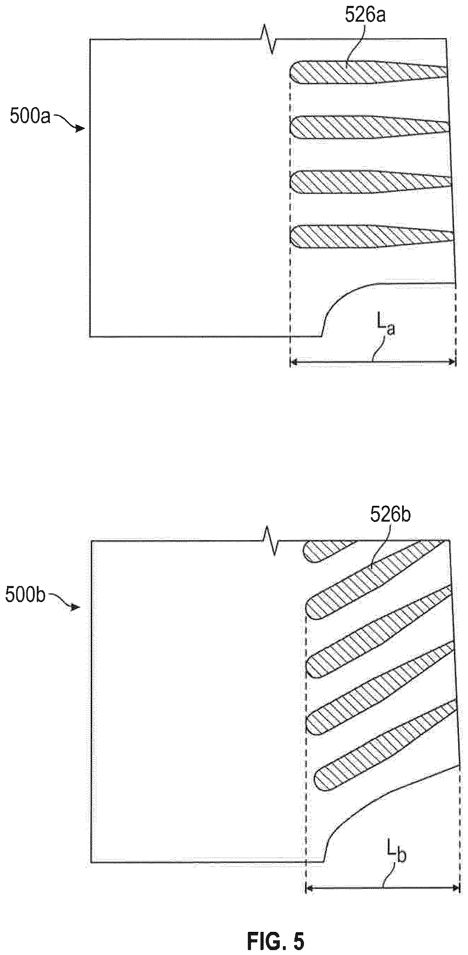

Turning now to FIG. 5, a comparison between a typical elongated pedestal arrangement in a first airfoil 500a and an angled elongated pedestal arrangement in a second airfoil 500b is schematically shown. The first airfoil 500a includes a plurality of elongated pedestals 526a arranged with parallel orientation and angled at substantially 90° to a feed direction (e.g., as shown and described with respect to FIG. 3). The second airfoil 500b includes a plurality of angled elongated pedestals 526b arranged with parallel orientation and angled at a bleed direction with respect to a feed direction that is less than 90° (e.g., as shown and described with respect to FIG. 4).

As shown in FIG. 5, the elongated pedestals 526a of the first airfoil 500a have a first axial pedestal length Lₐ. Similarly, the angled elongated pedestals 526b of the second airfoil 500b have a second axial pedestal length L_{b}. Due to the angle of orientation of the angled elongated pedestals 526b of the second airfoil 500b, the second axial pedestal length L_{b} may be less than the first axial pedestal length Lₐ. As such, the angled pedestals 526b occupy less physical space within the respective second airfoil 500b in the axial direction (e.g., left to right on the page of FIG. 5). This reduced axial dimension enables a larger cooling cavity at the trailing edge of the airfoil. That is, for the same trailing edge slot length, the axial length may be reduced. This provides for more room in the cooling cavity and shifts the high heat transfer found in the meter sections to be closer to the trailing edge. The relative reduction of the conduction length associated with angled elongated pedestals enables the highest internal convective heat transfer located within the metering section of the trailing edge slot to be located in more immediate proximity to the airfoil trailing edge location, thereby increasing the local thermal cooling effectiveness, improving local airfoil trailing edge durability, oxidation, creep, and thermal mechanical failure (TMF) life capability.

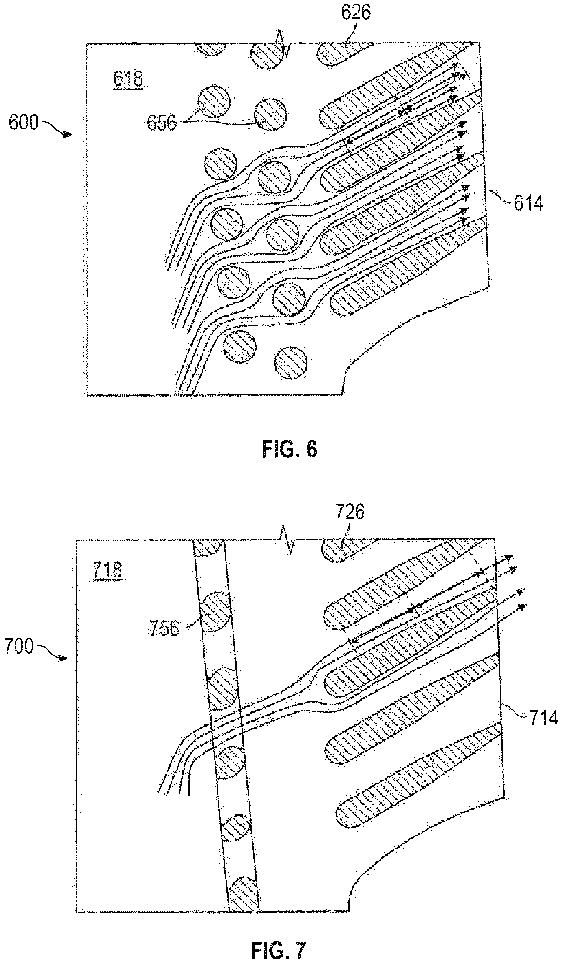

Turning now to FIG. 6, an alternative configuration of an airfoil 600 in accordance with an embodiment of the present disclosure is shown. The airfoil 600 is similar to that described above, and thus similar features may not be described again. As shown, the airfoil 600 includes a plurality of angled elongated pedestals 626 arranged along a trailing edge 614 of the airfoil 600. As shown, located upstream of the angled elongated pedestals 626, within a cooling cavity 618, may be one or more upstream heat transfer augmentation features 656. The upstream heat transfer augmentation features 656 may be pedestals, trip strips, pin fins, hemispherical bumps, protrusions, dimples, or other structure that may increase thermal transfer at the trailing edge of the airfoil 600. In some embodiments, the upstream heat transfer augmentation features 656 may aid in turning a cooling flow toward the angled elongated pedestals 626.

Turning now to FIG. 7, an alternative configuration of an airfoil 700 in accordance with an embodiment of the present disclosure is shown. The airfoil 700 is similar to that described above, and thus similar features may not be described again. As shown, the airfoil 700 includes a plurality of angled elongated pedestals 726 arranged along a trailing edge 714 of the airfoil 700. As shown, located upstream of the angled elongated pedestals 726, within a cooling cavity 718, may be one or more upstream heat transfer augmentation features 756. The upstream heat transfer augmentation features 756 of this embodiment are arranged as an impingement rib structure that may increase thermal transfer at the trailing edge of the airfoil 700 and aid in turning a cooling flow toward the angled elongated pedestals 726.

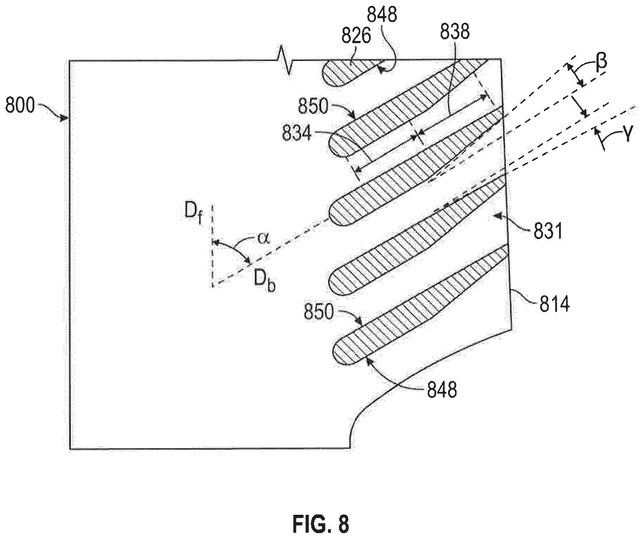

Turning now to FIG. 8, an alternative configuration of an airfoil 800 in accordance with an embodiment of the present disclosure is shown. The airfoil 800 is similar to that described above, and thus similar features may not be described again. As shown, the airfoil 800 includes a plurality of angled elongated pedestals 826 arranged along a trailing edge 814 of the airfoil 800. As discussed above, each angled elongated pedestal 826 has a respective upstream side 848 and a respective downstream side 850, which are angled with respect to a feed direction D_{f}. The angled pedestals 826 are oriented in a bleed direction D_{b} at a bleed angle α. Further, the angled pedestals 826 have meter sections 834 and diffuser sections 838. The meter sections 834 are defined by parallel walls of the angled elongated pedestals 826.

The diffuser sections 838 of some embodiments of the present disclosure may have differing diffusion angles (i.e., the change in wall angle after the meter section 834 ends). As shown in FIG. 8, a trailing edge slot 831 may have a diffuser section 838 defined by a first diffusion angle β and a second diffusion angle γ. The first diffusion angle β is along the upstream side 848 of a given angled elongated pedestal 826 and defines the downstream side of the trailing edge slot 831. The second diffusion angle γ is along the downstream side 850 of the adjacent and opposing angled elongated pedestal 826 and defines the upstream side of the same trailing edge slot 831.

Depending on a desired diffusion to be achieved, the first diffusion angle β and the second diffusion angle γ may be different, producing a non-axisymmetric tapered geometry feature. For example, in some embodiments, the first diffusion angle β may be an angle between 0° and about 20° and the second diffusion angle γ may be an angle between 0° and about 7°. In rotating airfoil designs, centrifugal forces allow for the diffusion angles to be larger on the upstream side 848 as compared to the downstream side 850 of the angled elongated pedestals 826. In reference to the trailing edge slot 831, larger radial slot diffusion angles are acceptable due to rotational inertial forces which inherently "push" the flow toward the radially outboard or downstream side of the trailing edge slot 831. Conversely, the radially inboard or upstream side of the trailing edge slot 831 requires "smaller" diffusion angles in order to mitigate the potential for cooling flow separation due to the rotational inertial forces, which "pulls" the flow away from the upstream side of the trailing edge slot 831, generating local flow vortices that can entrain hot freestream gas reducing the local thermal performance of the airfoil trailing edge.

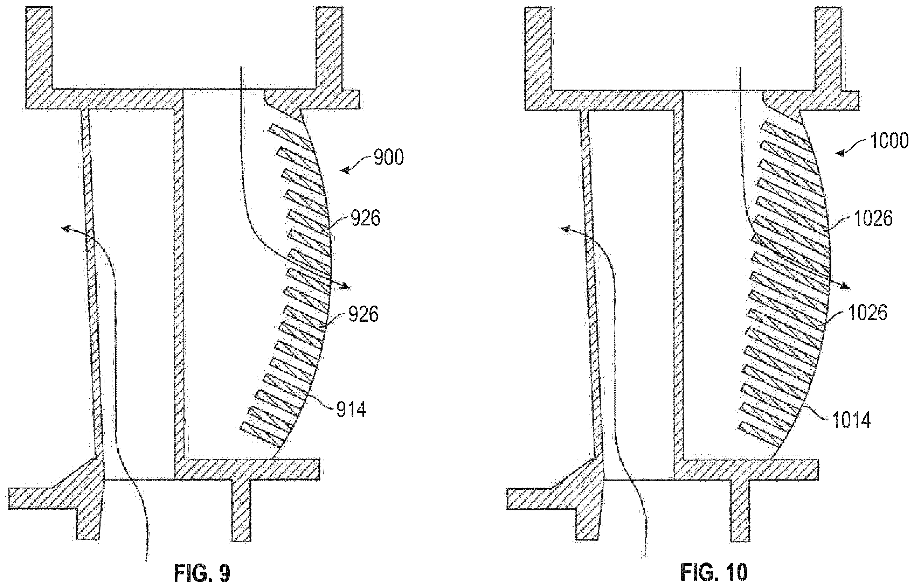

Turning now to FIG. 9, a schematic illustration of an airfoil 900 having angled elongated pedestals 926, in accordance with an example not forming part of the invention, is shown. The airfoil 900 is similar to that described above, and thus similar features may not be described again. As shown, the airfoil 900 includes a plurality of angled elongated pedestals 926 arranged along a trailing edge 914 of the airfoil 900. In this example, the angled elongated pedestals 926 have constant length. That is, the total length of each angled pedestal 926 is the same. Also shown is the angled elongated pedestals 926 arranged along a bowed trailing edge 914 of the airfoil 900. Turning now to FIG. 10, a schematic illustration of an airfoil 1000 having angled elongated pedestals 1026, in accordance with an example not forming part of the invention, is shown. The airfoil 1000 is similar to that described above, and thus similar features may not be described again. As shown, the airfoil 1000 includes a plurality of angled elongated pedestals 1026 arranged along a bowed trailing edge 1014 of the airfoil 1000. In this example, the angled elongated pedestals 1026 have variable length. That is, the total length of each angled elongated pedestal 1026 may be different, or in sets of different length angled elongated pedestals 1026. The different lengths may be employed to achieve desired cooling and/or cooling flow characteristics within the airfoil 1000.

As shown and described above, the angled elongated pedestals are all arranged to be parallel along the length of the trailing edge. However, in some embodiments, not all of the angled elongated pedestals need be angled at the same angle or even in the same direction. For example, in some configurations, a trailing edge cooling cavity may be fed cooling air from both the inner and outer diameters (e.g., in a vane). In some blade configurations, a serpentine flow can be employed to supply cooling air proximate the tip, and thus radially inward flowing, while a separate supply of cooling air can be provided from the root region, thus allowing for contra-sourced cooling flows in a blade.

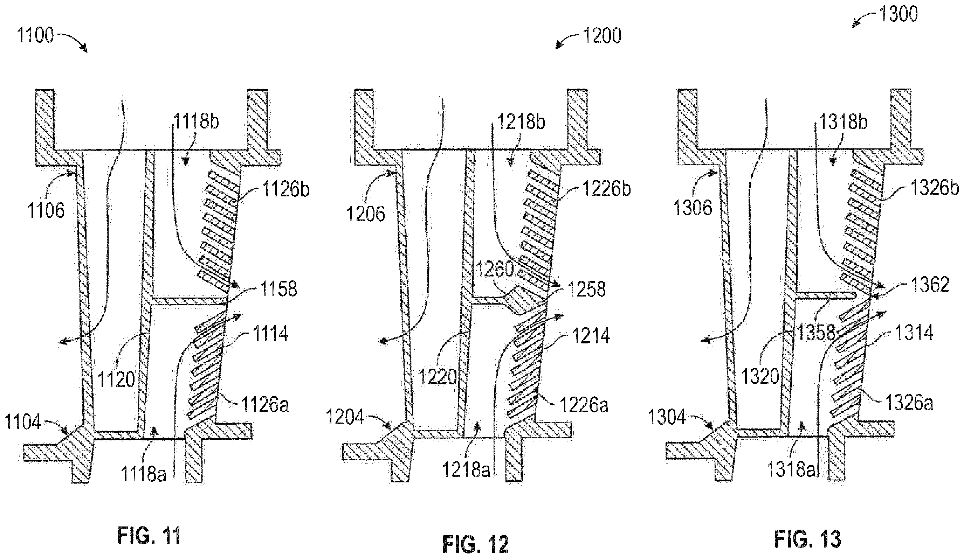

For example, turning to FIG. 11, a schematic illustration of an airfoil 1100 not forming part of the invention is shown. The airfoil 1100 is similar to that described above, and thus similar features may not be described again. As shown, the airfoil 1100 includes two sets of angled elongated pedestals, a first set 1126a and a second set 1126b, arranged along a trailing edge 1114 of the airfoil 1100. In this example, the airfoil 1100 has a first trailing edge cooling cavity 1118a and a second trailing edge cooling cavity 1118b. As shown, the first trailing edge cooling cavity 1118a is fed cooling air at a first end 1104 (e.g., inner diameter) and the second trailing edge cooling cavity 1118b is fed cooling air at a second end 1106 (e.g., outer diameter). The first trailing edge cooling cavity 1118a is separated from the second trailing edge cooling cavity 1118b by a dividing rib 1158. Each of the angled elongated pedestals of the sets 1126a, 1126b are angled with respect to the cooling flow that is fed into the respective cavities, as illustratively shown. The dividing rib 1158 extends in an axial direction (e.g., aftward) from a rib 1120 to the trailing edge 1114 to separate the first trailing edge cooling cavity 1118a and the second trailing edge cooling cavity 1118b.

Turning to FIG. 12, a schematic illustration of an airfoil 1200 in accordance with an embodiment of the present invention is shown. The airfoil 1200 is similar to that described above, and thus similar features may not be described again. As shown, the airfoil 1200 includes two sets of angled elongated pedestals, a first set 1226a and a second set 1226b, arranged along a trailing edge 1214 of the airfoil 1200. In this embodiment, the airfoil 1200 has a first trailing edge cooling cavity 1218a and a second trailing edge cooling cavity 1218b. As shown, the first trailing edge cooling cavity 1218a is fed cooling air at a first end 1204 (e.g., inner diameter) and the second trailing edge cooling cavity 1218b is fed cooling air at a second end 1206 (e.g., outer diameter). The first trailing edge cooling cavity 1218a is separated from the second trailing edge cooling cavity 1218b by a dividing rib 1258. Each of the angled elongated pedestals of the sets 1226a, 1226b are angled with respect to the cooling flow that is fed into the respective cavities, as illustratively shown. The dividing rib 1258 extends in an axial direction (e.g., aftward) from a rib 1220 to the trailing edge 1214 to separate the first trailing edge cooling cavity 1218a and the second trailing edge cooling cavity 1218b. As shown, the dividing rib 1258 includes a rib flow control feature 1260 located where the dividing rib 1258 intersects with the trailing edge 1214. The rib flow control feature 1260 maintains the meter section of the last trailing edge slot in the trailing edge cooling cavities 1218a, 1218b. In some embodiments, the rib flow control feature 1260 may be hollow or solid and may include impingement holes, film cooling holes, etc. as will be appreciated by those of skill in the art.

Turning to FIG. 13, a schematic illustration of an airfoil 1300 not forming part of the invention is shown. The airfoil 1300 is similar to that described above, and thus similar features may not be described again. As shown, the airfoil 1300 includes two sets of angled elongated pedestals, a first set 1326a and a second set 1326b, arranged along a trailing edge 1314 of the airfoil 1300. In this example, the airfoil 1300 has a first trailing edge cooling cavity 1318a and a second trailing edge cooling cavity 1318b. As shown, the first trailing edge cooling cavity 1318a is fed cooling air at a first end 1304 (e.g., inner diameter) and the second trailing edge cooling cavity 1318b is fed cooling air at a second end 1306 (e.g., outer diameter). The first trailing edge cooling cavity 1318a is separated from the second trailing edge cooling cavity 1318b by a dividing rib 1358. Each of the angled elongated pedestals of the sets 1326a, 1326b are angled with respect to the cooling flow that is fed into the respective cavities, as illustratively shown. The dividing rib 1358 extends in an axial direction (e.g., aftward) from a rib 1320 toward the trailing edge 1314 to separate the first trailing edge cooling cavity 1318a and the second trailing edge cooling cavity 1318b. In this embodiment, the dividing rib does not extend the complete length to the trailing edge 1314, but rather may end short of the trailing edge 1314. As such, a merging region 1362 may be defined as a region at an end of the dividing rib 1358 and between end elongated pedestals of the sets 1326a, 1326b of angled elongated pedestals.

Although shown in the above illustrative embodiments of FIGS. 11-13, with the dividing rib located about mid span in the radial direction, such position is not to be limiting. For example, in some embodiments, the dividing rib may be arranged at any desired radial position within the respective airfoil.

In the embodiments described above, and variations thereon, the metering length (i.e., length of the meter section) between any two adjacent elongated pedestals features will have a minimum metering length (e.g., 1.5 D_{H}). In some embodiments, due to, for example, the curved nature of the trailing edge of the airfoil, the total metering length for one elongated pedestal to any adjacent elongated pedestal may be different because the relative orientation angle of the elongated pedestal features may differ. In some such embodiments, the elongated pedestal feature length may change as function of radial location along the airfoil trailing edge. However, the amount of "overlap" between adjacent metering sections must be maintained at a minimum of one and a half times the hydraulic diameter (1.5 D_{H}).

Moreover, in some embodiments, in order to achieve an adequate flow development length it may be necessary to modify the lengths of the metering section defined by any two adjacent angled elongated pedestals features. The overall length of the elongated pedestal feature and the meter length requirements for any two adjacent elongated pedestal features may be dictated by the shape of the airfoil trailing edge. For example, the shape of the airfoil trailing edge may be, without limitation, linear, tapered, concave curvature/bow, convex curvature/bow as a function of the airfoil true chord. The different meter lengths of any two adjacent angled elongated pedestals may also impact the relative taper angles to be unique for each upstream and downstream side of the of any two adjacent elongated pedestal features. Additionally the length of the elongated pedestal geometry may also be dictated by cooling air temperature heat pick considerations as well as internal convective metering slot heat transfer requirements in order to effectively cool the local airfoil trailing edge region.

Advantageously, the embodiments described herein provide for improved cooling flow at trailing edges of airfoils. The improved cooling is achieved through the inclusion of a plurality of angled elongated pedestals that are parallel to each other and defining meter sections between adjacent angled elongated pedestals. The angled elongated pedestals reduce the angle that a cooling flow has to make to enter a trailing edge slot defined between adjacent angled elongated pedestals. Accordingly, flow separation may be minimized or eliminated, resulting in lower pressure loss and better convective cooling flow characteristics. Advantageously, in some embodiments, the angled elongated pedestal arrangements described herein may eliminate the need for additional upstream flow conditioning features, such as crossover holes and pedestals. Moreover, additional real estate may be freed up for the radially extending cooling cavity (e.g., feed passage) at the trailing edge of the airfoil. Moreover, the angling of the trailing edge slots reduces the axial length of the slots while maintaining the same meter section length, giving even more real estate for the radial feed passage and bringing a high heat transfer coefficient found in the slot meter section closer to the trailing edge.

The use of the terms "a," "an," "the," and similar references in the context of description (especially in the context of the following claims) are to be construed to cover both the singular and the plural, unless otherwise indicated herein or specifically contradicted by context. The modifier "about" and/or "approximately" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," "radial," "axial," "circumferential," and the like are with reference to normal operational attitude and should not be considered otherwise limiting.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

Accordingly, the present disclosure is not to be seen as limited by the foregoing description, but is only limited by the scope of the appended claims.

## Claims

1. An airfoil (400; 500b; 600; 700; 800; 900; 1000; 1100; 1200; 1300) of a gas turbine engine (20) comprising:
an airfoil body having a leading edge and a trailing edge (414; 614; 714; 814; 914; 1114; 1214; 1314) and extending in a radial direction;
a cooling cavity (418; 618; 718) defined within the airfoil body at the trailing edge, wherein the cooling cavity extends in the radial direction within the airfoil body; and
a plurality of angled pedestals (426; 526b; 626; 726; 826; 926; 1026) arranged along the trailing edge defining a plurality of angled trailing edge slots (431; 831) therebetween,
wherein adjacent angled pedestals of the plurality of angled pedestals define a meter section (434; 834) of a respective angled trailing edge slot and a diffuser section (438; 838) of the respective angled trailing edge slot, wherein the meter section is defined by parallel sides of the adjacent angled pedestals, **characterized in that**:
the parallel sides of the adjacent angled pedestals are oriented at a bleed direction (D_{b}) that is less than 90° with respect to a feed direction (D_{f}) through the cooling cavity, wherein the feed direction (D_{f}) is in the radial direction and **in that**
the airfoil further comprises a dividing rib (1158; 1258; 1358) separating the cooling cavity into a first cooling cavity (1118a; 1218a; 1318a) and a second cooling cavity (1118b; 1218b; 1318b), wherein the dividing rib extends in an axial direction from a radially extending rib (1120; 1220; 1320) of the airfoil through the cooling cavity toward the trailing edge, wherein a first set (1126a; 1226a; 1326a) of angled pedestals of the plurality of pedestals is located within the first cooling cavity and a second set of angled pedestals (1126b;1226b;1326b) is located within the second cooling cavity,
a rib flow control feature (1260) being located at a trailing edge end of the dividing rib to maintain the meter section (434, 834) of the last trailing edge slot in the first and second cooling cavity (1118a; 1218a; 1318a; 1118b; 1218b; 1318b).

2. The airfoil of claim 1, wherein the bleed direction is between 40° and 70° with respect to the feed direction.

3. The airfoil of claim 1 or 2, wherein the meter section has a length that is a minimum of one and a half times a hydraulic diameter.

4. The airfoil of claim 1, 2 or 3, further comprising an upstream heat transfer augmentation feature (656; 756) arranged within the cooling cavity upstream relative to the plurality of angled pedestals in a flow direction through the cooling cavity, wherein the upstream heat transfer augmentation feature comprises a plurality of pedestals and an impingement rib.

5. The airfoil of any preceding claim, wherein the diffuser section is defined between tapering walls of adjacent elongated pedestals of the plurality of angled pedestals, the diffuser section extending from the meter section to the trailing edge, wherein a downstream side (850) defining the diffusion section has a first diffusion angle β and an upstream side (848) defining the diffusion section has a second diffusion angle γ, wherein each diffusion angle is a change in wall angle at an end of a respective meter section.

6. The airfoil of claim 5, wherein the angle β is greater than the angle γ.

7. The airfoil of claim 5, wherein the angle β is between 0° and 20°, and wherein the angle γ is between 0° and 7°.

8. The airfoil of claim any preceding claim, wherein the dividing rib extends a full distance from the radially extending rib to the trailing edge.

9. The airfoil of claim any preceding claim, wherein the first cooling cavity is fed cooling air from a first end (1104; 1204; 1304) of the airfoil and the second cooling cavity is fed cooling air from a second end (1106; 1206; 1306) of the airfoil.

10. The airfoil of claim any preceding claim, wherein the rib flow control feature is hollow.

11. The airfoil of any preceding claim, wherein the trailing edge is a bowed trailing edge.

12. The airfoil of any preceding claim, wherein each angled pedestal of the plurality of angled pedestals is the same length.

13. The airfoil of claims 1 to 11, wherein the angled pedestals of the plurality of angled pedestals having varying lengths.

14. The airfoil of any preceding claim, wherein the plurality of angled pedestals are arranged parallel to each other.

## Patentansprüche

1. Schaufelprofil (400; 500b; 600; 700; 800; 900; 1000; 1100; 1200; 1300) eines Gasturbinentriebwerks (20), umfassend:
einen Schaufelprofilkörper, der eine Vorderkante und eine Hinterkante (414; 614; 714; 814; 914; 1114; 1214; 1314) aufweist und sich in einer radialen Richtung erstreckt;
einen Kühlhohlraum (418; 618; 718), der innerhalb des Schaufelprofilkörpers an der Hinterkante definiert ist, wobei sich der Kühlhohlraum in der radialen Richtung innerhalb des Schaufelprofilkörpers erstreckt; und
eine Vielzahl von abgewinkelten Sockeln (426; 526b; 626; 726; 826; 926; 1026), die entlang der Hinterkante angeordnet sind und eine Vielzahl von abgewinkelten Hinterkantenschlitzen (431; 831) dazwischen definieren,
wobei angrenzende abgewinkelte Sockel aus der Vielzahl von abgewinkelten Sockeln einen Dosierabschnitt (434; 834) eines jeweiligen abgewinkelten Hinterkantenschlitzes und einen Diffusorabschnitt (438; 838) des jeweiligen abgewinkelten Hinterkantenschlitzes definieren, wobei der Dosierabschnitt durch parallele Seiten der angrenzenden abgewinkelten Sockel definiert ist, **dadurch gekennzeichnet, dass**:
die parallelen Seiten der angrenzenden abgewinkelten Sockel in einer Ablassrichtung (D_{b}) ausgerichtet sind, die weniger als 90° in Bezug auf eine Zufuhrrichtung (D_{f}) durch den Kühlhohlraum beträgt, wobei die Zufuhrrichtung (D_{f}) in der radialen Richtung liegt, und dadurch, dass
das Schaufelprofil ferner eine Teilungsrippe (1158; 1258; 1358) umfasst, die den Kühlhohlraum in einen ersten Kühlhohlraum (1118a; 1218a; 1318a) und einen zweiten Kühlhohlraum (1118b; 1218b; 1318b) trennt, wobei sich die Teilungsrippe in einer axialen Richtung von einer sich radial erstreckenden Rippe (1120; 1220; 1320) des Schaufelprofils durch den Kühlhohlraum zur Hinterkante erstreckt; wobei ein erster Satz (1126a; 1226a;
1326a) abgewinkelter Sockel aus der Vielzahl von Sockeln innerhalb des ersten Kühlhohlraums angeordnet ist und ein zweiter Satz abgewinkelter Sockel (1126b; 1226b; 1326b) innerhalb des zweiten Kühlhohlraums angeordnet ist,
wobei ein Rippendurchflusssteuerungsmerkmal (1260) an einem Hinterkantenende der Teilungsrippe angeordnet ist, um den Dosierabschnitt (434, 834) des letzten Hinterkantenschlitzes in dem ersten und dem zweiten Kühlhohlraum (1118a; 1218a; 1318a; 1118b; 1218b; 1318b) aufrechtzuerhalten.

2. Schaufelprofil nach Anspruch 1, wobei die Ablassrichtung zwischen 40° und 70° in Bezug auf die Zufuhrrichtung beträgt.

3. Schaufelprofil nach Anspruch 1 oder 2, wobei der Dosierabschnitt eine Länge aufweist, die mindestens das Eineinhalbfache eines hydraulischen Durchmessers beträgt.

4. Schaufelprofil nach Anspruch 1, 2 oder 3, ferner ein stromaufwärtiges Wärmeübertragungsverstärkungsmerkmal (656, 756) umfassend, das innerhalb des Kühlhohlraums stromaufwärts in Bezug auf die Vielzahl von abgewinkelten Sockeln in einer Strömungsrichtung durch den Kühlhohlraum angeordnet ist, wobei das stromaufwärtige Wärmeübertragungsverstärkungsmerkmal eine Vielzahl von Sockeln und eine Prallrippe umfasst.

5. Schaufelprofil nach einem der vorstehenden Ansprüche, wobei der Diffusorabschnitt zwischen sich verjüngenden Wänden angrenzender länglicher Sockel aus der Vielzahl von abgewinkelten Sockeln definiert ist, wobei sich der Diffusorabschnitt von dem Dosierabschnitt zur Hinterkante erstreckt, wobei eine stromabwärtige Seite (850), die den Diffusionsabschnitt definiert, einen ersten Diffusionswinkel β aufweist, und eine stromaufwärtige Seite (848), die den Diffusionsabschnitt definiert, einen zweiten Diffusionswinkel γ aufweist, wobei jeder Diffusionswinkel eine Veränderung in einem Wandwinkel an einem Ende eines jeweiligen Dosierabschnitts ist.

6. Schaufelprofil nach Anspruch 5, wobei der Winkel β größer als der Winkel γ ist.

7. Schaufelprofil nach Anspruch 5, wobei der Winkel β zwischen 0° und 20° beträgt und wobei der Winkel γ zwischen 0° und 7° beträgt.

8. Schaufelprofil nach einem der vorstehenden Ansprüche, wobei sich die Teilungsrippe über einen vollständigen Abstand von der sich radial erstreckenden Rippe zur Hinterkante erstreckt.

9. Schaufelprofil nach einem der vorstehenden Ansprüche, wobei der erste Kühlhohlraum mit Kühlluft von einem ersten Ende (1104, 1204, 1304) des Schaufelprofils gespeist wird und der zweite Kühlhohlraum mit Kühlluft von einem zweiten Ende (1106, 1206, 1306) des Schaufelprofils gespeist wird.

10. Schaufelprofil nach einem der vorstehenden Ansprüche, wobei das Rippendurchflusssteuerungsmerkmal hohl ist.

11. Schaufelprofil nach einem der vorstehenden Ansprüche, wobei die Hinterkante eine gebogene Hinterkante ist.

12. Schaufelprofil nach einem der vorstehenden Ansprüche, wobei jeder abgewinkelte Sockel aus der Vielzahl von abgewinkelten Sockeln dieselbe Länge aufweist.

13. Schaufelprofil nach den Ansprüchen 1 bis 11, wobei die abgewinkelten Sockel aus der Vielzahl von abgewinkelten Sockeln unterschiedliche Längen aufweisen.

14. Schaufelprofil nach einem der vorstehenden Ansprüche, wobei die Vielzahl von abgewinkelten Sockel parallel zueinander angeordnet sind.

## Revendications

1. Profil aérodynamique (400 ; 500b ; 600 ; 700 ; 800 ; 900 ; 1000 ; 1100 ; 1200 ; 1300) d'un moteur à turbine à gaz (20) comprenant :
un corps de profil aérodynamique ayant un bord d'attaque et un bord de fuite (414 ; 614 ; 714 ; 814 ; 914 ; 1114 ; 1214 ; 1314) et s'étendant dans une direction radiale ;
une cavité de refroidissement (418 ; 618 ; 718) définie à l'intérieur du corps de profil aérodynamique au niveau du bord de fuite, dans lequel la cavité de refroidissement s'étend dans la direction radiale à l'intérieur du corps de profil aérodynamique ; et
une pluralité de socles inclinés (426 ; 526b ; 626 ; 726 ; 826 ; 926 ; 1026) disposés le long du bord de fuite définissant une pluralité de fentes de bord de fuite inclinées (431 ; 831) entre eux,
dans lequel les socles inclinés adjacents de la pluralité de socles inclinés définissent une section de compteur (434 ; 834) d'une fente de bord de fuite inclinée respective et une section de diffuseur (438 ; 838) de la fente de bord de fuite inclinée respective, dans lequel la section de compteur est définie par côtés parallèles des socles inclinés adjacents, **caractérisé en ce que** :
les côtés parallèles des socles inclinés adjacents sont orientés dans une direction de purge (D_{b}) qui est inférieure à 90° par rapport à une direction d'alimentation (D_{f}) à travers la cavité de refroidissement, dans laquelle la direction d'alimentation (D_{f}) est dans la direction radiale et **en ce que** le profil aérodynamique comprend en outre une nervure de séparation (1158 ; 1258 ; 1358) séparant la cavité de refroidissement en une première cavité de refroidissement (1118a ; 1218a ; 1318a) et une seconde cavité de refroidissement (1118b ; 1218b ; 1318b), dans lequel la nervure de séparation s'étend dans une direction axiale depuis une nervure s'étendant radialement (1120 ; 1220 ; 1320) du profil aérodynamique à travers la cavité de refroidissement vers le bord de fuite, dans lequel un premier ensemble (1126a ; 1226a ; 1326a) de socles inclinés de la pluralité de socles est situé à l'intérieur de la première cavité de refroidissement et un second ensemble de socles inclinés (1126b ; 1226b ; 1326b) est situé à l'intérieur de la seconde cavité de refroidissement,
un élément de commande d'écoulement de nervure (1260) étant situé à une extrémité de bord de fuite de la nervure de séparation pour maintenir la section de compteur (434, 834) de la dernière fente de bord de fuite dans la première et la seconde cavité de refroidissement (1118a ; 1218a ; 1318a ; 1118b ; 1218b ; 1318b).

2. Profil aérodynamique selon la revendication 1, dans lequel la direction de purge est comprise entre 40° et 70° par rapport à la direction d'alimentation.

3. Profil aérodynamique selon la revendication 1 ou 2, dans lequel la section de compteur a une longueur qui est au minimum une fois et demie un diamètre hydraulique.

4. Profil aérodynamique selon la revendication 1, 2 ou 3, comprenant en outre un élément d'augmentation de transfert de chaleur en amont (656 ; 756) agencé à l'intérieur de la cavité de refroidissement en amont par rapport à la pluralité de socles inclinés dans une direction d'écoulement à travers la cavité de refroidissement, dans lequel l'élément d'augmentation de transfert de chaleur en amont comprend une pluralité de socles et une nervure d'impact.

5. Profil aérodynamique selon une quelconque revendication précédente, dans lequel la section de diffuseur est définie entre des parois effilées de socles allongés adjacents de la pluralité de socles inclinés, la section de diffuseur s'étendant de la section de compteur au bord de fuite, dans lequel un côté aval (850) définissant la section de diffusion a un premier angle de diffusion β et un côté amont (848) définissant la section de diffusion a un second angle de diffusion γ, dans lequel chaque angle de diffusion est un changement d'angle de paroi à une extrémité d'une section de compteur respective.

6. Profil aérodynamique selon la revendication 5, dans lequel l'angle β est supérieur à l'angle γ.

7. Profil aérodynamique selon la revendication 5, dans lequel l'angle β est compris entre 0° et 20°, et dans lequel l'angle γ est compris entre 0° et 7°.

8. Profil aérodynamique selon une quelconque revendication précédente, dans lequel la nervure de séparation s'étend sur toute la distance de la nervure s'étendant radialement jusqu'au bord de fuite.

9. Profil aérodynamique selon une quelconque revendication précédente, dans lequel la première cavité de refroidissement est alimentée en air de refroidissement depuis une première extrémité (1104 ; 1204 ; 1304) du profil aérodynamique et la seconde cavité de refroidissement est alimentée en air de refroidissement depuis une seconde extrémité (1106 ; 1206 ; 1306) du profil aérodynamique.

10. Profil aérodynamique selon une quelconque revendication précédente, dans lequel l'élément de commande d'écoulement de nervure est creux.

11. Profil aérodynamique selon une quelconque revendication précédente, dans lequel le bord de fuite est un bord de fuite courbé.

12. Profil aérodynamique selon une quelconque revendication précédente, dans lequel chaque socle incliné de la pluralité de socles inclinés a la même longueur.

13. Profil aérodynamique selon les revendications 1 à 11, dans lequel les socles inclinés de la pluralité de socles inclinés ont des longueurs variables.

14. Profil aérodynamique selon une quelconque revendication précédente, dans lequel la pluralité de socles inclinés sont agencés parallèlement les uns aux autres.
